# EUROPEAN PATENT SPECIFICATION

(11) **EP 4 337 808 B1**
(45) Date of publication and mention of the grant of the patent: **18.03.2026**
(21) Application number: 22728239.9
(22) Date of filing: 10.05.2022
(51) Int. Cl.: C25B 1/04, C25B 11/077, C25B 11/052, C25B 11/056, C25B 11/061, C25B 11/069, C25B 11/091, C25B 11/063

(54) **ELECTRODE FOR GAS EVOLUTION IN ELECTROLYTIC PROCESSES**
ELEKTRODE FÜR DIE GASENTWICKLUNG IN ELEKTROLYTISCHEN PROZESSEN
ÉLECTRODE POUR L'ÉVOLUTION DES GAZ DANS LES PROCÉDÉS ÉLECTROLYTIQUES

(30) Priority: 10.05.2021 IT 202100011936
(43) Date of publication of application: 20.03.2024
(73) Proprietor: Industrie De Nora S.P.A., 20134 Milano (IT)
(72) Inventor: MATIENZO, DJ Donn, 20134 Milan (IT); DI BARI, Chiara, 20134 Milan (IT); INSTULI, Emanuele, 20134 Milan (IT); TESTOLIN, Anna, 20134 Milan (IT)
(74) Representative: Reitstötter Kinzebach
(86) International application number: PCT/EP2022/062572
(87) International publication number: WO 2022/238370

(56) References cited:
- EP-A1- 3 351 659
- EP-A1- 3 763 849
- GB-A- 1 391 625
- JP-A- 2014 203 809

## Description

### FIELD OF THE INVENTION

The present invention concerns an electrode for gas evolution in electrolytic processes comprising a nickel substrate and a nickel-based catalytic coating. Such electrodes can particularly be employed as anodes in an electrochemical cell, for instance as an oxygen-evolving anode in alkaline water electrolysis.

### BACKGROUND OF THE INVENTION

Alkaline water electrolysis is typically carried out in electrochemical cells where an anodic and a cathodic compartment are divided by a suitable separator such as a diaphragm or a membrane. An aqueous alkaline solution at a pH higher than 7, for instance an aqueous KOH solution, is supplied to the cell and an electrical current flow is established between electrodes in the cathodic and anodic compartment, respectively, i.e. between cathode and anode, at a potential difference (cell voltage) with a typical range of 1.8 to 2.4 V. Under these conditions, water is split into its constituents so that gaseous hydrogen evolves at the cathode and gaseous oxygen evolves at the anode. The gaseous products are removed from the cell so that the cell can be operated in a continuous fashion. The anodic oxygen evolution reaction in alkaline media can be summarized as follows:

4 OH⁻ → O₂ + 2 H₂O + 4 e⁻

Alkaline water electrolysis is typically carried out in a temperature range from 40 to 90 °C. Alkaline water electrolysis is a promising technology in the field of energy storage, particularly storage of energy from fluctuating renewable energy sources such as solar and wind energy.

In this respect, it is particularly important to reduce the cost of the technology in terms of less expensive equipment, such as less expensive electrodes, but also in terms of efficiency of the overall process. One important aspect of cell efficiency concerns the required cell voltage in order to effectively generate water electrolysis. The overall cell voltage is essentially governed by the reversible voltage, i.e. the thermodynamic contribution to the overall reaction, voltage losses due to ohmic resistances in the system, the hydrogen overpotential relating to the kinetics of the hydrogen evolution reaction at the cathode and the oxygen overpotential relating to the kinetics of the oxygen evolution reaction at the anode.

The oxygen evolution reaction has a sluggish kinetic, which is the cause of the high overpotential of the anode. The result is the increase of the operating cell voltage and the difficulty of the large-scale commercialization of the technology.

Moreover, electrodes for water electrolysis should exhibit a certain resistance to unprotected shutdowns. In fact, during typical operation of an electrolysis plant made of a stack of single electrochemical cells, it is often requested to stop the power supply due to technical problems maintenance, causing and inversion of polarity harmful for the electrodes. Such inversion is usually avoided using an external polarisation system (or polarizer) which maintains the electrical current flow in the desired direction. This ancillary component circumvents the potential electrode degradation caused by metal dissolution or electrode corrosion but increase the investment cost of the system.

In prior art, preferred anodes/anodic catalysts for alkaline water electrolysis include bare nickel (Ni) electrodes, Raney nickel (Ni+Al) electrodes and electrodes having iridium (Ir) oxide-based catalytic coatings.

A bare nickel electrode is formed by a nickel substrate only, such as a Ni mesh, which can easily be manufactured at low cost but which exhibits a high oxygen overpotential resulting in sluggish kinetics.

Raney nickel electrodes are manufactured by thin film deposition of the catalytic powder of Ni+Al by plasma spray technique. At the industrial level, plasma spray technique is not often used for catalytic coatings due to the high cost of production and health and safety hazards associated with the technique, such as noise, explosiveness, intense flame at temperatures above 3000°C, fumes, etc. Moreover, the Raney nickel manufacturing process involves an activation process which is accomplished by leaching of aluminium from the catalyst coating, leaving almost pure nickel on the surface and increasing the surface area substantially. During the reaction of Al dissolution, H₂ is produced which constitutes a problem during the manufacturing process due to the abrupt exothermic reaction. Another technical problem of Raney nickel deposited via plasma spray is the resulting rather indented morphology of the coating. In a zero-gap cell, where the electrode is in contact with the membrane, the sharp indented surface may cause damage to the membrane.

Electrodes with iridium-based catalytic coatings are produced by thermal decomposition which is a well-established technology providing less hazards. However, iridium used in these electrodes is one of the least abundant noble metals in the earth's crust resulting not only in a high price but also in difficulties purchasing bulk quantities for industrial-scale manufacturing processes (for instance, gold is 40 times more abundant and platinum is 10 times more abundant than iridium). Moreover, Iridium-based coatings are typically multilayer coatings resulting in costly manufacturing processes. The multilayer catalytic coatings of prior art can comprise, for instance, a LiNiOₓ interlayer directly applied on a Ni substrate, a NiCoOₓ active layer applied to the interlayer and an iridium oxide outer layer. This multilayer composition exhibits a low resistance to unprotected shutdowns because Co and Ir are typically dissolved into the electrolyte solution during inversion of polarity.

GB 1 391 625 A describes an electrode for alkali chloride electrolysis which has a coating comprising an electroconductive perovskite bronze oxide.

Recently, materials having a perovskite-structure have shown promising performance as electrocatalysts for the oxygen evolution reaction in alkaline water electrolysis (c.f. DJ Donn Matienzo et al., "Benchmarking Perovskite Elctrocatalysts' OER Activity as Candidate Materials for Industrial Alkaline Water Electrolysis", Catalysts 2020, 10, 1387). Consequently, materials with perovskite-structure could be a cost-effective replacement for noble metal catalysts in electrodes conventionally used in alkaline water electrolysis. However, the preparation technique used in this prior art document involves a co-precipitation technique with subsequent thermal annealing at 700 °C in air. An ink, prepared by dispersing the resulting powder of the perovskite material in a solution containing water, isopropanol and a polymeric binder, is applied to a carbon electrode. Such delicate electrodes is merely suitable for electrochemical characterization of the catalyst material but are not stable enough for industrial-scale alkaline water electrolysis.

European patent application EP 3351659 A1 describes an anode for water electrolysis comprising a porous nickel substrate and a thin film formed on a surface of the substrate, where the thin film is made from a rare-earth-element(Ln)/nickel(Ni)/cobalt(Co) metal oxide having a perovskite structure (LnNiₓCo₍₁₋ₓ₎O₃, with 0 < x ≤ 1). The thin film is obtained by forming a precursor layer on the nickel substrate and calcinating the precursor layer at a temperature 400°C and 1000 °C Celsius, in particular at around 800 °C. Under these conditions, a nickel oxide layer is formed between the nickel substrate and the perovskite thin layer which increases overpotential against oxygen evolution in alkaline water electrolysis.

Japanese patent application JP 2009179871 A describes an electrode for water electrolysis using a metal oxide having a perovskite-type structure. The electrode is obtained by pressing a mixture of the metal oxide powder and a polymeric binder onto the stainless steel substrate. Likewise, Japanese patent application JP 2014203809 A describes an anode for water electrolysis where catalyst particles having a perovskite structure supported on valve metal carrier are applied on an electrode substrate using a polymeric binder. The electrical resistance and consequently the overpotential towards oxygen evolution of such an electrodes using a polymeric binder is high.

EP 3763849 A1 describes an anode for water electrolysis comprising: a nickel or a nickel-based alloy substrate; an intermediate layer formed on the surface of the Ni substrate and comprising a Li-containing nickel oxide; and a catalyst layer formed on a surface of the intermediate layer, wherein the catalyst layer comprises at least one catalyst selected from the group consisting of a nickel cobalt spinel oxide, a lanthanide nickel cobalt perovskite oxide, an iridium oxide, a ruthenium oxide, and a lithium nickel cobalt oxide.

EP 3444383A1 describes an anode for alkaline water electrolysis with a conductive nickel or nickel alloy substrate having one or more catalyst layers comprising a first catalyst component made of a nickel-cobalt spinel oxide or a lanthanide-nickel-cobalt perovskite oxide and a second catalyst component made of at least one of iridium oxide and ruthenium oxide. The catalyst layers are obtained by heat treatment of precursor solutions applied to the nickel or nickel alloy substrate.

US 4497698A describes an anode comprising a perovskite-type oxide made of lanthanum nickelate for electrocatalytic oxygen evolution from an alkaline electrolyte. The anode is made of pressed and sintered lanthanum nickelate powder. Such electrodes do not possess the required structural stability for industrial-scale alkaline water electrolysis. In summary, the anode for alkaline water electrolysis involving perovskite-type catalysts described in prior art suffer from various drawbacks. On the one hand, the high temperatures required for the formation perovskite structures is detrimental to the synthesis of perovskite materials directly on electrode substrates which are conventionally used in industrial alkaline water electrolysis because, for instance, commonly used metals such as nickel exhibit oxidation at these temperatures. On the other hand, industrial applications require electrodes with a stable electrocatalytic coating which maintains its stability at high current densities and adverse operation conditions involving, for instance, certain changes in current density and even sudden shut-downs or polarity reversals. However, at high current densities the gas evolution at the electrode surface may lead to damage and even partial detachment of the catalyst material.

It is therefore an object of the present invention to provide a cost-effective electrode for industrial alkaline water electrolysis which exhibits an improved mechanical stability under adverse operating conditions while exhibiting low oxygen overvoltage in alkaline water electrolysis applications.

### SUMMARY OF THE INVENTION

Various aspects of the present invention are described in the appended claims.

The present invention concerns an electrode for gas evolution in electrolytic processes comprising a nickel-based metal substrate and a coating formed on said substrate, wherein said coating comprises pre-formed particles of a catalyst material exhibiting a perovskite-type structure dispersed within a nickel-based metal or metal oxide binder.

As known in the art, a "material exhibiting a perovskite-type structure" describes a material having a crystal structure similar to the mineral perovskite (CaTiO₃). In general, perovskite catalysts exhibit a chemical formula according to ABX₃, where A and B are two cations, often of very different sizes, and X is an anion, typically oxygen that bonds to both cations. For the sake of simplicity, in the following description these particles exhibiting a perovskite-type structure are denoted "perovskite particles" or "perovskite material(s)" without intending to limit these particles/materials to the actual mineral perovskite (CaTiO₃).

It has surprisingly been found that by using pre-formed particles of the perovskite catalyst, the preparation of the catalyst material is not influenced by the thermal limitations of the material used for the electrode substrate. Moreover, using a metal or metal oxide binder provides the coating of the present invention with a high degree of mechanical stability under the operating conditions of alkaline water electrolysis while maintaining the high catalytic activity of perovskite materials, especially towards oxygen evolution reactions in alkaline water electrolysis, as found in the previous investigation of DJ Donn Matienzo et al. cited above.

The particles of the pre-formed catalyst material are preferably a powder material wherein the particles of the powder have particle sizes from 5 to 1000 nm. This size distribution does not preclude the rare occurrence of larger and smaller particles but shall be understood a meaning that at least 60%, preferably at least 90% of the number of particles of a given sample have sizes in the range from 5 to 1000 nm, preferably in the range from 50 to 500 nm. In the context of the present invention, "particle size" refers to the diameter of a sphere into which a particle can be inscribed. Particles sizes can, for instance be determined by evaluating Scanning Electron Microscopy images (SEM images) of the powder.

Said particles of said pre-formed catalyst material preferably have a mean size in a range from 100 to 500 nm, more preferably in a range from 150 to 300 nm.

The particles of the pre-formed catalyst preferably have a composition ABO₃, where compound A is selected from rare earth and/or alkaline earth cations and compound B is selected from transition metal cations or a combination of multiple transition metal cations. When the perovskite material comprises two different cations at the A site, for instance a proportion y of one cation and a proportion (1-y) for another cation, where 0<y<1, such materials are often denoted "double perovskite materials". Typically, the "double perovskite materials" comprise a combination of rare earth cations and alkaline earth cations at the A site.

In certain embodiments of the invention, compound A is selected from La, Pr, Ba, Sr, Ca, or combinations thereof. Preferred A-compounds of the "double perovskite" type are, for instance, Pr_{y}Ba_{1-y}, Pr_{y}Sr_{1-y}, Pr_{y}Ca_{1-y} In these embodiments, compound B is preferably selected from Mn, Fe, Co, Ni, Cu, or combinations thereof. Particularly preferred perovskite materials used in the present invention comprise LaMnO₃, LaNiO₃, LaCoO₃, PrCoO₃, Pr_{0.8}Ba_{0.2}CoO₃, Pr_{0.8}Sr_{0.2}CoO₃, Pr_{0.9}Ca_{0.1}CoO₃.

Nickel-based substrates include nickel substrates, nickel alloy substrates (particularly NiFe alloys and NiCo alloys and combinations thereof) and nickel oxide substrates. Metallic nickel substrates are particularly preferred in the context of the present invention. Like bare nickel electrodes, the electrode of the present invention benefits from the catalytic properties of nickel but without exhibiting the sluggish kinetics of bare nickel electrodes and without requiring additional noble metals or other metals for improving reaction kinetics.

A "nickel-based metal binder" or a "nickel-based metal oxide binder" in the sense of the present invention is an essentially continuous, essentially homogeneous phase of a nickel or nickel alloy metal or of a nickel or nickel alloy metal oxide. Such a continuous phase can be produced by applying a homogeneous precursor solution containing a metal salt on a substrate, for instance by spraying or brushing, followed by a thermal treatment. As known in the art, such a thermal treatment will result in an essentially homogeneous coating which, however, in the context of the present invention, acts as a binder for the particulate perovskite catalyst material. The binder itself, i.e. without added particles, results in homogeneous metal or metal oxide coatings which are mechanically very stable but exhibit a high overpotential towards oxygen evolution and are therefore, as such, not suitable for alkaline water electrolysis. However, due to the dispersion of perovskite particles within these coatings according to the present invention, suitable catalytic coatings for electrochemical reactions, especially for alkaline water electrolysis can be obtained.

In one embodiment, the nickel-based metal or metal oxide binder comprises nickel and optionally at least another transition metals, for instance manganese or titanium. Preferably, the coating comprises a nickel oxide binder.

The coating has a preferred loading of catalyst particles in a range from 6 to 30 g/m² projected surface area (pjt), preferably in the range of 8 to 16 g/m², and a loading of metal or metal oxide binder in a range from 6 to 30 g/m², preferably in the range of 8 to 16 g/m², referred to the metal element. In a particularly preferred embodiment, both the catalyst particle loading and the binder loading is in the range of 10 g/m².

The electrode of the present invention can be manufactured within a wide range of metal or metal oxide binder to catalyst particle ratios. Preferably, the weight ratio of the metal or metal oxide binder to the particles of the pre-formed catalyst is within a range from 0.2 to 5, more preferably in a range from 0.5 to 2 and typically around 1, i.e. corresponding to a 1:1 ratio. As far as the binder is concerned, the above-mentioned weight ratio refers to the metal component of the binder, i.e. in case of a metal oxide, to the metal component of the metal oxide. When the same metal, e.g. nickel, is used in the binder and in the pre-formed catalyst particles, the respective amounts will be attributed to the binder component and the particles separately. Generally, a higher ratio, i.e. more binder, favours the stability of the coating, while a lower ratio, i.e. more catalyst particles, favours the catalytic activity of the coating not only by the larger amount of catalyst particles available but also by increasing the porosity of the coating thus increasing the area in which catalyst and electrolyte can come into contact.

In certain embodiments, especially in embodiments where a nickel substrate is employed, the coating comprises a nickel-based interlayer deposited between the nickel substrate and the catalytic porous outer layer. Preferably, the nickel-based interlayer is a LiNiOₓ interlayer directly applied on the metal substrate. Such interlayers and their method of manufacturing are already known from noble metal based catalytic coatings.

The coating, i.e. the layer consisting of catalyst particles dispersed in a metal or metal oxide binder, not including any optional interlayer, has a typical thickness in the range of 3 to 50 micrometre (µm), for instance in the range of 5 to 50 µm, preferably in the range of 5 to 20 µm, for instance in the range of 10 to 20 µm.

The substrate of the electrode of the present invention is preferably a porous metal substrate thus facilitating the contact of electrolyte and coating as well as the release of gas bubbles formed during electrocatalytic reactions.

In a preferred embodiment, the coating of the present invention is essentially free from noble metals such as iridium. "Essentially free" means that the corresponding metals are typically outside any detectable range when using, for instance, typical laboratory X-ray diffraction (XRD) techniques.

In a preferred embodiment, the metal substrate is an expanded nickel mesh. The nickel mesh which can be employed in a variety of configurations regarding mesh thickness and mesh geometry. Preferred mesh thicknesses are in the range of 0.2 to 1 mm, preferably around 0.5 mm. Typical mesh openings are rhombic openings having a long width in range of 2 to 10 mm and a short width in the range of 1 to 5 mm.

The electrode of the present invention can be employed in a variety of electrochemical applications. Due to its low value of oxygen overvoltage, the electrode of the present invention is preferably used as an anode for oxygen evolution, particularly as an anode in an electrolysis cell for alkaline water electrolysis.

The present invention also concerns a method for the production of an electrode as defined above, comprising the following steps:
In an initial step a) pre-formed particles of a catalyst material exhibiting a perovskite-type structure are dispersed in a solution comprising a nickel-based metal salt to obtain a precursor suspension. The pre-formed particles can be obtained by any suitable method for forming perovskite catalyst particles known in the art, for instance by the method described by DJ Donn Matienzo et al. described above. The dispersion of the pre-formed catalyst particles in a solution can be accomplished by any suitable method available to the skilled person, for instance by grinding the pre-formed particles to a powder having the desired particle size distribution and dispersing the powder in the solution using a stirrer and/or sonication.

In a subsequent step b) the precursor suspension is applied to a nickel-based metal substrate to obtain an applied coating. For applying the precursor suspension to the metal substrate, any suitable application technique such as brushing or spray-coating can be employed.

In a subsequent step c), the applied coating is dried at a temperature in a range from 80-150 °C to facilitate solvent evaporation.

In a subsequent step d) the applied coating is calcinated in a temperature range suitable for thermal decomposition of the precursor compounds. The thermal treatment is preferably carried out at a temperature well below the melting temperature of the metal substrate and at a temperature where no oxidation of the metal substrate in an oxygen-containing atmosphere takes place. Moreover, the pre-formed particles should remain stable and intact during the application process of the precursor solution and the subsequent thermal treatment. For instance, using nickel as a metal substrate for the electrode, thermal treatment is typically carried out at temperatures up to 550 °C. Preferably, the applied coating is calcinated at a temperature in a range from 300-600 °C.

According to optional step e), steps b) to d) can be repeated until a coating having a desired specific load of pre-formed particles and binder is obtained. Accordingly, the coating can be created in a series of layers in order to precisely tailor the desired loading. As only one coating composition is used, the manufacturing of the coated electrode is faster and leaner than prior art methods involving multiple layers of different composition, and therefore, carrying out the method of the present invention is less expensive.

In optional step f), the coating is subjected to a final heat treatment at a temperature in a range from 300 - 500 °C. The final heat treatment is essentially a curing process enhancing the lifetime of the electrode and can also help decreasing the oxygen overpotential.

In one embodiment of the method of the present invention, the solution in step a) comprises water, an alcohol, preferably isopropanol, and, optionally, suitable additives stabilizing the dispersion of the catalytic particles. Preferably, the volume ratio of water to alcohol is selected from 0.1. to 10, preferably from 0.1 to 9, particularly from 0.5 to 2, for instance a 1:1 volume ratio. Depending on health and safety considerations in the manufacturing process, a water to alcohol ratio at the upper end of the above range can be selected, for instance a ratio of 9:1 in view of the inflammability of alcohols. Suitable additives include water-soluble polymeric additives, for instance sulfonated tetrafluoroethylene based fluoropolymer-copolymers commercialized under the tradename Nafion^{®} or polyethylene glycol (PEG). For health and safety reasons, PEG is a preferred additive in the method of the present invention. PEG is available in a large range of average molecular weights. In the method of the present invention, PEG having an average molecular in the range of 6000 to 40000, preferably PEG 20000, can be employed. The PEG additive is typically used at a concentration of 2 to 10 wt.%, preferably at around 5 wt.%. The solvent or additives of the dispersion will either evaporate during the drying step or are burned off during the calcinating step. Accordingly, any polymeric stabilizer initially included in the solution will no longer be present in the final coating. Consequently, the electrode of the present invention is delimited from the electrodes of prior art using perovskite catalysts and polymeric binders for stabilizing the final coating.

The hydrodynamic diameter of the perovskite particles dispersed in the coating solution was determined via dynamic light scattering (DLS) and yielded results of about 3 µm. For a given solution the resulting hydrodynamic diameter was relatively independent from the particle size of the perovskite powder. It was determined that perovskite powders having an average size in the range of 100 to 300 nm yielded hydrodynamic diameters in the coating solution of about 3 µm.

The solution comprising a metal salt which forms the metal or metal oxide binder in the coating of the present invention can be obtained by dissolving the metal salt in the aqueous solution in which the pre-formed catalyst particles are suspended. The metal salt in step a) is preferably a nickel halide such as nickel chloride.

The present invention is associated with particular advantages: It has surprisingly been found that although no noble metals are used in the catalytic coating of the electrode of the present invention, the increased active surface area of the coating obtained by including perovskite-type particles increase the electrochemical activity of the material significantly, for instance by reducing the overpotential towards oxygen evolution in alkaline water electrolysis. Moreover, according to the present invention, an inorganic metal binder such as nickel oxide is used. Nickel oxide binder is particularly preferred when the electrode is used for alkaline water electrolysis.

Therefore, the present invention also relates to the use of the electrode defined above as an anode in an electrolytic cell for alkaline water electrolysis. The present invention is also directed to a method for alkaline water electrolysis comprising feeding an alkaline electrolyte is fed into an electrolytic cell comprising an anode and a cathode and passing an electrical current through said electrolyte between said anode and said cathode such that oxygen is generated at said anode and hydrogen is generated at said cathode, wherein said anode is an electrode as defined above.

For other applications, however, different metal binders can be employed depending on the desired mechanical stability of the coating and the intended electrochemical application. In addition, thermal decomposition of applied precursor solutions is a well-established process which easily translates into large-scale production. Moreover, thermal decomposition techniques are easily tuneable to a large variety of metal substrates, independent from geometry or size of the substrate. As the coating uses only highly abundant metals, the electrode of the present invention and its manufacturing process are considerably less expensive than corresponding electrodes and processes using noble metals such as iridium. Due to the high abundancy, bulk purchases necessary for industrial-scale production are easily accomplished. Finally, the morphology of the coating produced according to the present invention is flat, thus avoiding damages of membranes in zero-gap electrolysis cells.

### BRIEF DESCRIPTION OF THE DRAWINGS

The invention will now be described in connection with certain preferred embodiments and corresponding figures in more detail.

In the drawings:
- Fig. 1: depicts a schematic drawing of an electrode according to the present invention;
- Fig. 2: show SEM images of three embodiments of the electrode according to the present invention overlaid by the results of EDX scans;
- Fig. 3: shows XRD patterns of three embodiments of the electrode according to the present invention;
- Fig. 4: shows SEM images of two embodiments of the electrode of the present invention;
- Fig. 5: shows the oxygen overpotential results determined by CISEP tests;
- Fig. 6: shows the results of an accelerated lifetime tests; and
- Fig. 7: shows the results of a shutdown test.

### DETAILED DESCRIPTION OF PREFERRED EMBODIMENTS

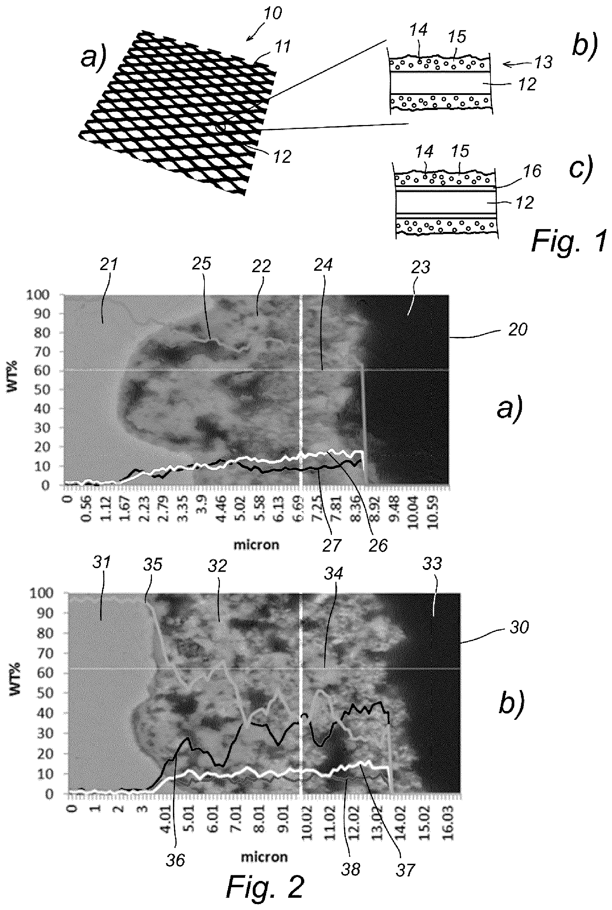

Fig. 1 shows in drawing a) a schematic representation of an electrode 10 according to the present invention. The electrode comprises a metal substrate, in the present case a coated nickel mesh 11 having a typical thickness in the range of 0.1 to 5 mm. Drawings b) and c) of Fig. 1 show enlarged cross-sectional views of a coated wire 12 of the mesh 1 according to two alternatives of the coating of the present invention. According to alternative b) the cross-sectional view depicts the nickel substrate, i.e. nickel wire 12 and a catalytic coating layer 13 comprising solid perovskite-type particles 14 dispersed in a nickel oxide binder 15. The coating according to alternative c) corresponds to alternative b) except that a LiNi-intermediate layer 16 is applied directly onto the nickel wire substrate 12 and the catalytic coating layer 13, also comprising solid perovskite-type particles 14 dispersed in a nickel oxide binder 15, is arranged on top of the intermediate layer 16.

### Example 1: Preparation of coating suspension

### a) Preparation of preformed solid catalyst particles via chemical synthesis

The co-precipitation synthesis procedure of DJ Donn Matienzo et al. mentioned above was employed to synthesize the preformed perovskite catalyst particles: The synthesis of various perovskites having an ABO₃ composition with A= La, Pr, Pr_{0.9}Ca_{0.1}, and B = Ni or Co employed corresponding stoichiometric amounts of A-site metal nitrates (La(NO₃)₂·6H₂O, Pr(NO₃)₃·6H₂O, Ca(NO₃)₂) and B-site metal nitrates (Ni(NO₃)₂·6H₂O, Co(NO₃)₂·6H₂O) were dissolved in deionized water. After stirring at room temperature for at least 1 hour to ensure complete dissolution, KOH solution was dropped in slowly while the solution was continuously stirred. The molar ratio A nitrate : B nitrate : KOH was 1:1:6. After stirring for about 10 to 15 min, the formed precipitate was washed with deionized water until at approximately neutral pH and was collected using a centrifuge. The filtered precipitate was then dried in air at 60 C for 3 h. Finally, to obtain the desired perovskite structures, the dried precipitate was calcinated at 700 °C for 3 h in air. The samples were then ground into a fine powder comprising particles in the range of 100 to 500 nm with a mean particles size (depending on type of perovskite) in the range of 200 to 300 nm.

### b) Preparation of coating solution

The nickel oxide binder component of the coating was prepared by dissolving nickel chloride (NiCl₂·6H₂0) in water and isopropanol (1:1 vol. ratio). Nafion^{®} (a sulfonated tetrafluoroethylene based fluoropolymer-copolymer commercialized by DuPont de Nemours, Inc.) was added as an ionomer. Coating solutions using PEG 20000 instead of Nafion^{®} and water/isopropanol at 9:1 vol. ratio have been used in variants of this example and allowed preparation of similar coated electrodes.

### c) Dispersing preformed solid catalyst particles and coating solution

The preformed solid particles obtained in a) were added to the solution prepared b) and any agglomerates where dispersed by sonicating and magnetics stirring to obtain the final coating suspension.

### Example 2 (EX2): Preparation of a nickel mesh electrode with a LaNiO₃-particle/NiOₓ-binder coating

For preparing 1 m² of coated mesh, a woven nickel mesh having a thickness of 0.5 mm having rhombic openings of 5 mm long width and 2.8 mm short with, was sandblast and etched in a hydrochloric acid solution. The coating suspension of Example 1 was deposited by brushing on each side of the mesh, dried at 90 °C for 10 minutes and baked at 500 °C for 10 minutes. The deposition, drying and calcination steps were repeated until a final nickel loading of 10 g/m² projected area and a final LaNiO₃-particle loading of 10 g/m² projected area was reached. No post-baking was effected.

### Example 3 (EX3): Preparation of a nickel mesh electrode with a PrCoO₃-particle/NiOₓ-binder coating

A similar preparation technique as in Example 2 was adopted to obtain an electrode having a final nickel loading of 10 g/m² projected area and a final PrCoO₃-particle loading of 10 g/m² projected area.

### Example 4 (EX4): Preparation of a nickel mesh electrode with a PrCaCoO₃-particle/NiOₓ-binder coating

A similar preparation technique as in Example 2 was adopted to obtain an electrode having a final nickel loading of 10 g/m² projected area and a final PrCaCoO₃-particle loading of 10 g/m² projected area.

### Counterexample 5 (CEx5)

Counterexample 5 corresponds to an electrode with a noble metal based catalytic coating commercialized by the applicant. On a nickel mesh similar to Example 2 a coating made of a mixture comprising LiNiIrOₓ and IrO₂ was applied.

### Counterexample 6 (CEx6)

The bare nickel mesh electrode of Example 2 without any coating was used as a further counterexample for comparison purposes.

### Counterexample 7 (CEx7)

The bare nickel mesh electrode of Example 2 with a coating consisting of nickel binder only was used as a further counterexample. This effect, the coating solution of Example 1b) was applied in a similar manner as described for coating suspension of Example 2 until a nickel loading in the binder coating of 10 g/m²was reached.

### A. Mechanical and Chemical Coating Characteristics

### A.1 Homogeneity

Electrodes prepared according to Examples 2 and 3 were characterized using Scanning Electron Microscopy (SEM) and Energy-Dispersive X-ray Spectroscopy (EDX) techniques. Fig. 2a) shows an SEM image 20 of a cross-section of the electrode of Example 2 (Ex2) overlaid by the results of an EDX scan. The SEM image 20 shows the bare nickel substrate 21, the catalytic coating 22 and a darker region 23 on the right-hand side of the image which indicates a carbon resin used for sample preparation. Overlaid to image 20 are the results of an EDX scan along scan line 24 showing the weight percentages (wt%) of nickel (line 25), lanthanum (line 26) and oxygen (line 27), respectively. Fig. 2b) shows a similar SEM image 30 of a cross-section of the electrode of Example 3 (Ex3), again overlaid by the results of an EDX scan. The SEM image 30 shows the bare nickel substrate 31, the catalytic coating 32 and the carbon resin region 33. Overlaid to image 30 are again the results of an EDX scan along scan line 34 showing the weight percentages (wt%) of nickel (line 35), praseodymium (line 36), cobalt (line 37) and oxygen (line 38), respectively.

As can be taken from Fig. 2, in the electrode of Example 2 where the perovskite particles and the binder comprise nickel, the nickel profile (line 25 in Fig. 2a) does not show a clear interface between substrate 21 and catalytic coating 22 so that particles and nickel oxide binder cannot be clearly distinguished. However, La and O (lines 26 and 27) show a marked increase at the interface. In contrast, as can be taken from Fig. 2b) of the electrode of Example 3, the nickel profile line 35 clearly drops at interface between substrate 31 and catalytic layer 32 so that in the embodiment of Example 3 the catalyst particles can be easily distinguished from the NiO binder. In summary, the catalytic layers 22 and 32 show a good homogeneity in terms of the composition.

### A.2 Chemical Composition

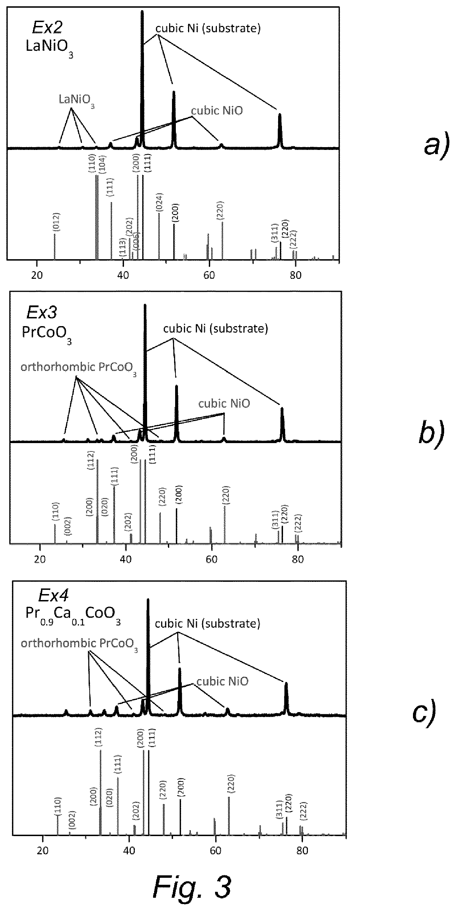

The chemical composition of the electrode was further analysed using X-Ray Diffraction (XRD) techniques. Fig. 3 shows the corresponding results for the electrodes of Example 2 (Fig. 3a), Example 3 (Fig. 3b) and Example 4 (Fig. 3c) containing different preformed perovskites. The x-axis denote the diffraction angle 2θ and the y-axis denote the diffraction intensity in arbitrary units (for instance in counts per scan). The vertical lines mark the positions of individual reflections of standard cubic NiO (ICDD No. 04-012-6347) and cubic Ni - as the substrate (ICDD No. 00-004-0850). In addition, tiny peaks at 2θ in the 20 to 40 ° range are identified for the crystalline phases of the deposited perovskite materials. The vertical lines mark the positions of individual reflections of standard rhombohedral LaNiO₃ (ICDD No. 04-013-6811) and orthorhombic PrCoO₃ (ICDD No. 04-013-4301).

### A.3 Morphological Characterization

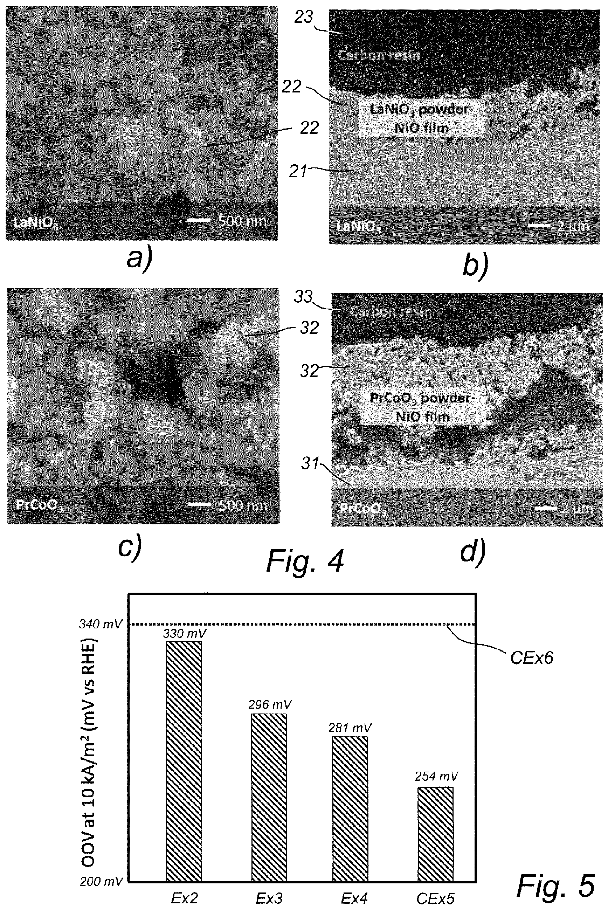

Surface and cross section morphologies of electrodes according to Examples 2 and 3 have been investigated via SEM images. The results are shown in Fig. 4 where Fig. 4a) is a top view and Fig. 4b) a cross-sectional of an electrode according to Example 2 (Ex2) while Fig. 4c) is a top view and Fig. 4d) a cross-sectional of an electrode according to Example 3 (Ex3). The same perovskite material loading (10 g/m²) was targeted for these samples. Reference signs used in Fig. 4 correspond to the reference signs used in Fig. 2. The cross-section analysis shows average film thickness ranging from 6 to 9 µm. It can also be seen in Fig. 4 that the catalytic coating of the present invention exhibits high porosity allowing electrolyte to reach even catalytic sites close to the interface between substrate 21, 31 and the respective catalytic coating 22, 32.

### B. Electrochemical Coating Characteristics

### B.1 Oxygen Overvoltage

A "Corrected Impedance Single Electrode Potential" (CISEP) test was employed to characterize the electrochemical performance of the electrode of the invention compared to prior art anodes used in alkaline water electrolysis. To determine the oxygen overvoltage of the electrode of the present invention, it has been tested as an anode in a three-electrode beaker-cell. The testing conditions are summarized in Table 1.

**Table 1:**

| | |
|---|---|
| Electrolyte | 25 wt% KOH in deionised H₂O (1.5 l) |
| Temperature | 80°C |
| Cathode | Nickel mesh (projected area 12 cm²) |
| Working anode electrolysis area | projected area 1 cm² |
| Reference electrode | Standard Calomel Electrode (SCE) |

At first, the sample undergoes 2 hours of pre-electrolysis (conditioning) at 10 kA/m² to stabilise the oxygen overvoltage (OOV). Then, several chronopotentiometry steps are applied to the sample. Final output of the CISEP test is the average of the three steps performed at 10 kA/m², corrected by the impedance of the electrolyte.

Fig. 5 summarizes a comparison between the bare nickel anode at 340 mV of Counterexample 6 (CEx6), the iridium-based anode of Counterexamples 5 (CEx5), and the electrodes of the present invention according to Examples 2, 3 and 4 (Ex2, Ex3, Ex4), respectively. The energetic saving (10 to 60 mV lower oxygen overvoltage OOV than a bare nickel electrode) obtainable with the anode of the present invention mitigates the problem of the high operational costs given by the sluggish kinetic of the anodic reaction of an uncoated nickel mesh without involving costly noble metals.

### B.2 Lifetime Test

An Accelerated Lifetime Test (ALT) was employed to estimate the lifetime of the catalytic coating. The test consists of long term electrolysis in a beaker cell with a two-electrode set up and a continued electrolysis current directly applied to them. The applied conditions are harsher compared to the one of the CISEP test and are above typical operating conditions in order to accelerate the consumption process. The conditions employed in the accelerated lifetime test are summarized in Table 2 below:

**Table 2**

| | |
|---|---|
| Electrolyte | 30 wt% KOH in deionised H₂O |
| Current density | 20-40 kA/m² |
| Temperature | 88°C |
| Counter electrode | Nickel mesh |
| Working electrode electrolysis area | 1 cm²-pjt |

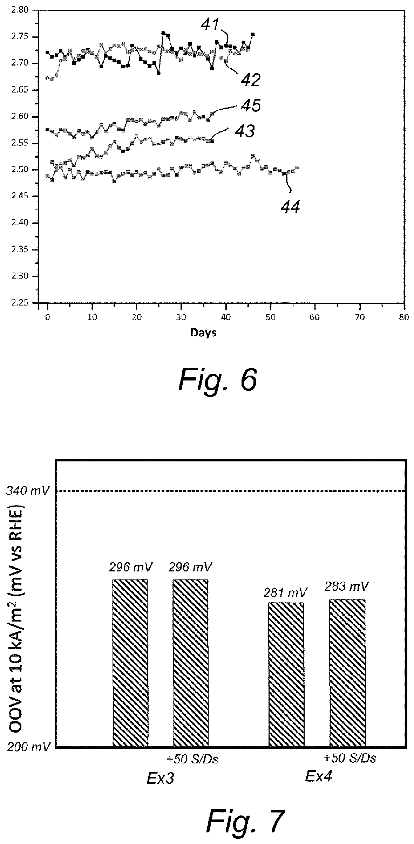

ALT data are shown in Fig. 6. The x-axis denotes the duration of the test in days and the y-axis denotes the cell voltage in volt. Data points 41 indicate the results for a non-coated bare nickel electrode according to Counterexample 6 showing a stable cell voltage in a range from 2.7 V to 2.75 V. Data points 42 indicate an electrode coated with a nickel oxide binder layer only according to Counterexample 7 showing an essentially similar behaviour as the bare nickel electrode. Data points 43 denote an electrode according to Example 2, which shows a minor increase in cell voltage from 2.50 and 2.55 V over 35 days of operation. Data Points 44 indicate an electrode according to Example 3, which show exhibits a low cell voltage of 2,48 mV without any increase/deterioration over 70 days of operation. Finally, data points 45 indicate an electrode according to Example 4 which also exhibits only a minor increase in cell voltage from 2.57 to 2.60 V over 35 days of operation. These give an indication on the good coating stability and lifetime of the electrode of present invention.

### B.2 Lifetime Test

The resistance to shutdowns was measured by comparing the oxygen overvoltage (OOV) before and after 50 cycles of shutdowns (S/Ds). Fig. 7 shows a comparison of the OOV values (measured OER overpotential values (V vs RHE) at 10 kA/m²) for the electrodes of Examples 3 (Ex3) and 4 (Ex4), respectively, before and after 50 cycles of shutdowns (current reversals). The left column of each example shows the OOV value before the shutdown test and the right column shows the OVV value after 50 shutdowns. It can be seen that the electrodes of the present invention exhibits a good resistance to shutdowns: The oxygen overvoltage of the electrode of Example 3 does not increase at all and the electrode of Example 4 shows only a moderate increase of 2 mV.

The preceding description is not intended to limit the invention, which may be used according to various embodiments without however deviating from the objectives and whose scope is uniquely defined by the appended claims. In the description and in the claims of the present application, the terms "comprising", "including" and "containing" are not intended to exclude the presence of other additional elements, components or process steps.

## Claims

1. An electrode for gas evolution in electrolytic processes comprising a nickel-based metal substrate and a coating formed on said substrate, wherein said coating comprises pre-formed particles of a catalyst material exhibiting a perovskite-type structure dispersed within a nickel-based metal or metal oxide binder.

2. The electrode according to claim 1, wherein said particles of said pre-formed catalyst material have a particle size in a range from 5 to 1000 nm.

3. The electrode according to claim 2, wherein said particles of said pre-formed catalyst material have a mean size in a range from 100 to 300 nm.

4. The electrode according to one of claims 1 to 3, wherein said particles of said pre-formed catalyst material have a composition of ABO₃, where compound A is selected from rare earth and/or alkaline earth cations and compound B is selected from transition metal cations or a combination of multiple transition metal cations.

5. The electrode according to claim 4, wherein compound A is selected from La, Pr, Ba, Sr, Ca, or combinations thereof, and compound B is selected from Mn, Fe, Co, Ni, Cu, or combinations thereof.

6. The electrode according to claim 5, wherein compound A is chosen from the group consisting of: Pr_{y}Ba_{1-y}, Pr_{y}Sr_{1-y}, and Pr_{y}Ca_{1-y}, with 0<y<1.

7. The electrode according to one of claims 1 to 6, wherein said nickel-based metal or metal oxide binder comprises nickel and at least another transition selected from manganese or titanium.

8. The electrode according to one of claims 1 to 7, wherein said coating has a loading of catalyst particles in a range from 6 to 30 g/m², preferably in the range of 8 to 16 g/m², and a loading of metal or metal oxide binder in a range from 6 to 30 g/m², preferably in the range of 8 to 16 g/m², referred to the metal element.

9. The electrode according to one of claims 1 to 8, wherein the weight ratio of said metal or metal oxide binder to said particles of said pre-formed catalyst is in a range from 0.2 to 5.

10. The electrode according to one of claims 1 to 9, wherein said substrate is a nickel mesh.

11. The electrode according to one of claims 1 to 10, wherein said electrode is an anode for oxygen evolution.

12. A method for the production of an electrode as defined in one of the previous claims, comprising the following steps:
a) dispersing of pre-formed particles of a catalyst material exhibiting a perovskite-type structure in a solution comprising a nickel-based metal salt to obtain a precursor suspension;
b) applying the precursor suspension to a nickel-based metal substrate to obtain an applied coating;
c) drying the applied coating at a temperature in a range from 80 - 150 °C;
d) calcinating the applied coating at a temperature in a range from 300 - 600 °C;
e) optionally, repeating steps b) to d) until a coating having a desired specific load of pre-formed particles and binder is obtained;
f) optionally heat treating said coating at a temperature in a range from 300-500 °C.

13. The method according to claim 12, wherein said solution in step a) comprises water, an alcohol, preferably isopropanol, and a polymeric stabilizer.

14. The method according to one of claims 12 or 13, wherein said metal salt in step a) is a metal halide.

15. A method for alkaline water electrolysis comprising feeding an alkaline electrolyte into an electrolytic cell comprising an anode and a cathode and passing an electrical current through said electrolyte between said anode and said cathode such that oxygen is generated at said anode and hydrogen is generated at said cathode, wherein said anode is an electrode according to one of claims 1 to 11.

## Patentansprüche

1. Elektrode zur Gasentwicklung in elektrolytischen Prozessen, umfassend ein Substrat aus einem nickelbasierten Metall und eine auf diesem Substrat ausgebildete Beschichtung, wobei die Beschichtung vorgeformte Partikel eines Katalysatormaterials mit einer perowskitartigen Struktur umfasst, die in einem Bindemittel aus einem nickelbasierten Metall oder Metalloxid dispergiert sind.

2. Elektrode gemäß Anspruch 1, wobei die Partikel des vorgeformten Katalysatormaterials eine Partikelgröße im Bereich von 5 bis 1000 nm aufweisen.

3. Elektrode gemäß Anspruch 2, wobei die Partikel des vorgeformten Katalysatormaterials eine mittlere Größe im Bereich von 100 bis 300 nm aufweisen.

4. Elektrode gemäß einem der Ansprüche 1 bis 3, wobei die Partikel des vorgeformten Katalysatormaterials eine Zusammensetzung der Form ABO₃ aufweisen, wobei die Verbindung A aus Kationen der Seltenen Erden und/oder Erdalkalimetalle ausgewählt ist und die Verbindung B aus Kationen der Übergangsmetalle oder einer Kombination mehrerer Kationen der Übergangsmetalle ausgewählt ist.

5. Elektrode gemäß Anspruch 4, wobei die Verbindung A aus La, Pr, Ba, Sr, Ca oder Kombinationen davon ausgewählt ist und die Verbindung B aus Mn, Fe, Co, Ni, Cu oder Kombinationen davon ausgewählt ist.

6. Elektrode gemäß Anspruch 5, wobei die Verbindung A aus der Gruppe ausgewählt ist, die aus Pr_{y}Ba_{1-y} , Pr_{y}Sr_{1-y} und Pr_{y} Ca_{1-y} besteht, wobei 0<y<1 ist.

7. Elektrode gemäß einem der Ansprüche 1 bis 6, wobei das nickelbasierte Metall oder Metalloxid-Bindemittel Nickel und mindestens ein weiteres Übergangsmetall, ausgewählt aus Mangan oder Titan, umfasst.

8. Elektrode gemäß einem der Ansprüche 1 bis 7, wobei die Beschichtung eine Beladung mit Katalysatorpartikeln im Bereich von 6 bis 30 g/m², vorzugsweise im Bereich von 8 bis 16 g/m², und eine Beladung mit Metall- oder Metalloxidbindemittel im Bereich von 6 bis 30 g/m², vorzugsweise im Bereich von 8 bis 16 g/m², bezogen auf das Metallelement, aufweist.

9. Elektrode gemäß einem der Ansprüche 1 bis 8, wobei das Gewichtsverhältnis des Metalls oder Metalloxidbindemittels zu den Partikeln des vorgeformten Katalysators im Bereich von 0,2 bis 5 liegt.

10. Elektrode gemäß einem der Ansprüche 1 bis 9, wobei das Substrat ein Nickelnetz ist.

11. Elektrode gemäß einem der Ansprüche 1 bis 10, wobei die Elektrode eine Anode für die Sauerstoffentwicklung ist.

12. Verfahren zur Herstellung einer Elektrode gemäß einem der vorstehenden Ansprüche, umfassend die folgenden Schritte:
a) Dispergieren von vorgeformten Partikeln eines Katalysatormaterials, das eine perowskitartige Struktur aufweist, in einer Lösung, die ein Metallsalz auf Nickelbasis enthält, um eine Vorläufersuspension zu erhalten;
b) Aufbringen der Vorläufersuspension auf ein Substrat aus einem Metall auf Nickelbasis, um eine aufgebrachte Beschichtung zu erhalten;
c) Trocknen der aufgetragenen Beschichtung bei einer Temperatur im Bereich von 80 bis 150 °C;
d) Kalzinieren der aufgetragenen Beschichtung bei einer Temperatur im Bereich von 300 bis 600 °C;
e) optionales Wiederholen der Schritte b) bis d), bis eine Beschichtung mit einer gewünschten spezifischen Beladung an vorgeformten Partikeln und Bindemittel erhalten wird;
f) optionales Wärmebehandeln der Beschichtung bei einer Temperatur im Bereich von 300 bis 500 °C.

13. Verfahren gemäß Anspruch 12, wobei die Lösung in Schritt a) Wasser, einen Alkohol, vorzugsweise Isopropanol, und einen polymeren Stabilisator umfasst.

14. Verfahren gemäß einem der Ansprüche 12 oder 13, wobei das Metallsalz in Schritt a) ein Metallhalogenid ist.

15. Verfahren zur alkalischen Wasserelektrolyse, umfassend das Zuführen eines alkalischen Elektrolyts in eine Elektrolysezelle, die eine Anode und eine Kathode umfasst, und das Leiten eines elektrischen Stroms durch den Elektrolyten zwischen der Anode und der Kathode, so dass an der Anode Sauerstoff und an der Kathode Wasserstoff erzeugt wird, wobei die Anode eine Elektrode gemäß einem der Ansprüche 1 bis 11 ist.

## Revendications

1. Électrode pour dégagement gazeux dans des processus électrolytiques, comprenant un substrat métallique à base de nickel et un revêtement formé sur ledit substrat, dans laquelle ledit revêtement comprend des particules préformées d'un matériau catalyseur qui présente une structure de type pérovskite dispersées au sein d'un liant de métal ou d'oxyde de métal à base de nickel.

2. Électrode selon la revendication 1, dans laquelle lesdites particules dudit matériau catalyseur préformé présentent une taille de particule dans une plage de 5 à 1 000 nm.

3. Électrode selon la revendication 2, dans laquelle lesdites particules dudit matériau catalyseur préformé présentent une taille moyenne dans une plage de 100 à 300 nm.

4. Électrode selon l'une des revendications 1 à 3, dans laquelle lesdites particules dudit matériau catalyseur préformé présentent une composition d'ABO₃, où le composé A est sélectionné parmi les cations de terres rares et/ou alcalino-terreux et le composé B est sélectionné parmi des cations de métal de transition ou une combinaison de plusieurs cations de métal de transition.

5. Électrode selon la revendication 4, dans laquelle le composé A est sélectionné parmi La, Pr, Ba, Sr, Ca, ou des combinaisons de ceux-ci, et le composé B est sélectionné parmi Mn, Fe, Co, Ni, Cu, ou des combinaisons de ceux-ci.

6. Électrode selon la revendication 5, dans laquelle le composé A est sélectionné dans le groupe comprenant : Pr_{y}Ba_{1-y}, PrySr_{1-y} et PryCa_{1-y}, avec 0 < y < 1.

7. Électrode selon l'une des revendications 1 à 6, dans laquelle ledit liant de métal ou d'oxyde de métal à base de nickel comprend du nickel et au moins un autre métal de transition sélectionné parmi le manganèse ou le titane.

8. Électrode selon l'une des revendications 1 à 7, dans laquelle ledit revêtement présente une charge de particules de catalyseur dans une plage de 6 à 30 g/m², de préférence dans la plage de 8 à 16 g/m², et une charge de liant de métal ou d'oxyde de métal dans une plage de 6 à 30 g/m², de préférence dans la plage de 8 à 16 g/m², par rapport à l'élément métallique.

9. Électrode selon l'une des revendications 1 à 8, dans laquelle le rapport pondéral dudit liant de métal ou d'oxyde de métal auxdites particules dudit catalyseur préformé se situe dans une plage de 0,2 à 5.

10. Électrode selon l'une des revendications 1 à 9, dans laquelle ledit substrat est un treillis de nickel.

11. Électrode selon l'une des revendications 1 à 10, dans laquelle ladite électrode est une anode pour dégagement d'oxygène.

12. Procédé de production d'une électrode telle que définie dans l'une des revendications précédentes, comprenant les étapes suivantes consistant à :
a) disperser des particules préformées d'un matériau catalyseur présentant une structure de type pérovskite dans une solution comprenant un sel de métal à base de nickel pour obtenir une suspension de précurseur ;
b) appliquer la suspension de précurseur sur un substrat de métal à base de nickel pour obtenir un revêtement appliqué ;
c) sécher le revêtement appliqué à une température dans une plage de 80 à 150°C ;
d) calciner le revêtement appliqué à une température dans une plage de 300 à 600°C ;
e) facultativement, répéter les étapes b) à d) jusqu'à l'obtention d'un revêtement présentant une charge spécifique souhaitée de particules préformées et de liant ;
f) facultativement, procéder à un traitement thermique dudit revêtement, à une température dans une plage de 300 à 500°C.

13. Procédé selon la revendication 12, dans lequel ladite solution de l'étape a) comprend de l'eau, un alcool, de préférence de l'isopropanol, et un stabilisant polymère.

14. Procédé selon l'une des revendications 12 ou 13, dans lequel ledit sel de métal de l'étape a) est un halogénure de métal.

15. Procédé d'électrolyse d'eau alcaline, comprenant les étapes consistant à amener un électrolyte alcalin dans une cellule électrolytique comprenant une anode et une cathode, et faire passer un courant électrique à travers ledit électrolyte entre ladite anode et ladite cathode de façon telle que de l'oxygène est généré au niveau de ladite anode et que de l'hydrogène est généré au niveau de ladite cathode, dans lequel ladite anode est une électrode selon l'une des revendications 1 à 11.
